(19) Europäisches Patentamt / European Patent Office / Office européen des brevets

(11) **EP 3 460 264 B1**

(12) **FASCICULE DE BREVET EUROPEEN**

(45) Date de publication et mention
de la délivrance du brevet:
**04.05.2022   Bulletin 2022/18**

(21) Numéro de dépôt: **18182121.6**

(22) Date de dépôt: **06.07.2018**

(51) Classification Internationale des Brevets (IPC):
***F16B 31/02*** *(2006.01)*

(52) Classification Coopérative des Brevets (CPC):
**F16B 31/021**

(54) **SYSTEME DE FIXATION A PRECONTRAINTE CALIBREE**

FIXIERSYSTEM MIT KALIBRIERTER VORSPANNUNG

CALIBRATED PRESTRESSED FASTENING SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **20.09.2017  FR 1758702**

(43) Date de publication de la demande:
**27.03.2019   Bulletin 2019/13**

(73) Titulaire: **Sofast Technologie
42000 SAINT-ETIENNE (FR)**

(72) Inventeur: **GINEYS, Laurent
42170 SAINT JUST SAINT RAMBERT (FR)**

(74) Mandataire: **Cabinet Laurent & Charras
CS 70 203
15 rue Camille de Rochetaillée
42005 Saint-Etienne Cedex 1 (FR)**

(56) Documents cités:
**DE-A1-102010 030 051      FR-A1- 2 482 221
FR-A1- 2 972 255            GB-A- 1 357 875
GB-A- 2 183 768             US-A- 2 940 495
US-A- 4 290 337             US-A- 5 228 250
US-A1- 2003 021 652         US-A1- 2016 108 951**

**Description**

## DOMAINE TECHNIQUE

La présente invention se rapporte au domaine technique du matériel de fixation d'au moins deux éléments entre eux, et concerne plus particulièrement des liaisons boulonnées.

## ART ANTERIEUR

Dans ce domaine, il est connu d'appliquer une précontrainte dans une liaison boulonnée, telle que, par exemple, constituée par une vis et un écrou. La précontrainte est nécessaire pour assurer un bon comportement statique, principalement une ténacité à des chargements, et un bon comportement dynamique, pour réduire, voire éviter la fatigue prématurée de la liaison boulonnée.

Ainsi la maitrise d'un niveau de précontrainte est une exigence importante, spécialement dans des domaines liés directement à la sécurité des utilisateurs, tels que l'aviation ou le génie civile.

Plusieurs méthodes pour obtenir une précontrainte définie sont connues. Par exemple, une méthode connue consiste à appliquer un couple de serrage défini avec un système dynamométrique. Cependant, cette méthode nécessite l'utilisation d'outils spécifiques onéreux.

Une autre méthode consiste à utiliser des jauges d'extension. La précision est élevée mais la mise en place de cette méthode est compliquée et onéreuse.

Il est également connu d'utiliser une vis spécifique comprenant une zone fusible apte à se rompre sous un couple défini. Cependant, cette méthode implique l'utilisation d'un outil spécifique pour le serrage, particulièrement onéreux.

Il est également connu un système de fixation avec un écrou fusible comprenant deux parties séparées par une gorge apte à se rompre sous un certain couple de serrage. Cet écrou présente l'avantage de pouvoir être vissé sans utiliser d'outils spécifiques. Cependant, ce type d'écrou ne permet pas de maitriser la tension axiale dans le système de fixation afin de réaliser une précontrainte calibrée.

Le document US2940495A décrit un contre-écrou avec un portion d'entrainement avec une zone fusible.

## EXPOSE DE L'INVENTION

L'un des buts de l'invention est de fournir un procédé de fabrication d'un système de fixation d'au moins deux éléments entre eux, tout en permettant de calibrer et de maitriser la précontrainte axiale entre les éléments de fixation, sans nécessiter d'outils spécifiques.

A cet effet, il a été mis au point un procédé de fabrication d'un système de fixation conforme à l'objet de la revendication 1.

De cette façon, l'invention permet d'assurer une précontrainte axiale dans le système de fixation, d'une manière simple, efficace, répétable et calibrée.

De préférence, le système de fixation comprend un agent lubrifiant entre la pièce de fixation et la pièce de blocage, ou un agent lubrifiant entre celle de la pièce de fixation ou de la pièce de blocage qui est entrainée en rotation et l'élément en contact.

De cette façon les coefficients de frottements sont maitrisés et le système est précisément calibré pour assurer une précontrainte requise.

Selon une forme de réalisation particulière, la pièce de fixation est une vis et la pièce de blocage est un écrou. Le système est simple et ne nécessite aucun outil spécifique pour le serrage de l'écrou.

Avantageusement, et afin d'assurer un caractère démontable du système de fixation après rupture de la gorge, les deux parties de l'écrou comprennent des pans inclinés pour le vissage/dévissage.

Selon une forme de réalisation particulière, le système de fixation comprend une rondelle disposée entre l'écrou et l'un des éléments à fixer Avantageusement, le système de fixation comprend un anneau élastique positionné dans la gorge pour former une butée pour un moyen de serrage de la pièce de blocage.

## DESCRIPTION SOMMAIRE DES FIGURES

D'autres caractéristiques et avantages de l'invention ressortiront clairement de la description qui en est réalisée ci-après, à titre indicatif et nullement limitatif, en référence aux figures annexées dans lesquelles :

- la figure 1 représente, en coupe longitudinale, une liaison boulonnée fabriquée selon l'invention avant l'application du couple de serrage ;
- la figure 2 est similaire à la figure 1, après l'application du couple de serrage et la rupture d'écrou permettant d'assurer une tension axiale déterminée dans le système de fixation ;
- la figure 3 représente l'écrou en détail et en coupe longitudinale.

## DESCRIPTION DETAILLEE DE L'INVENTION

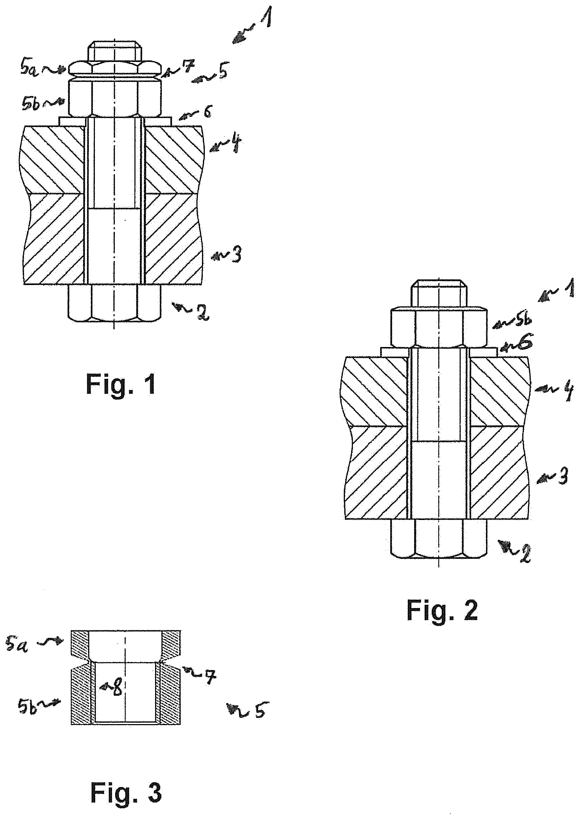

Les figures 1 et 2 illustrent un système de fixation (1) à précontrainte calibrée, pour la fixation d'au moins deux éléments (3, 4), entre eux, tout en permettant d'assurer une précontrainte axiale déterminée dans le système de fixation.

Le système de fixation (1) comprend une pièce de fixation filetée (2), par exemple une vis, et au moins une pièce de blocage taraudée (5), par exemple un écrou. D'autres réalisations sont possibles pour la pièce de fixation et la pièce de blocage sans sortir du cadre d'invention. Par exemple la pièce de fixation peut être constituée par une tige ou un axe fileté doté d'un écrou à chacune de ses extrémités. Pour des raisons de simplification, dans la suite de la description, l'invention est décrite en relation avec une vis (2) et un écrou (5).

L'écrou (5) comprend deux parties (5a, 5b), séparées par une gorge (7) apte à se rompre lorsqu'un couple de serrage défini est appliqué.

L'écrou (5) comprend un diamètre de fond de gorge (7) déterminé, et le système de fixation (1) comprend des coefficients de frottement déterminés entre la vis (2) et l'écrou (5), et entre celui de la vis (2) ou de l'écrou (5) qui est entrainé en rotation et l'élément en contact (3 ou 4). Le diamètre de fond de gorge (7) et lesdits coefficients de frottement sont déterminés pour assurer une rupture de la gorge (7) lorsqu'un effort déterminé de tension axiale entre la vis (2) et l'écrou (5) est atteint.

Avantageusement, afin d'assurer un caractère démontable du système de fixation après rupture de la gorge, les deux parties (5a, 5b) de l'écrou (5) comprennent des pans inclinés pour le vissage/dévissage. De préférence, un anneau élastique est positionné dans la gorge (7) pour former une butée pour un moyen de serrage de la pièce de blocage (5).

Selon une forme de réalisation particulière, le système de fixation (1) comprend une rondelle (6) qui est disposée entre l'écrou (5) et l'élément à fixer (4). De préférence, le système de fixation (1) comprend un agent lubrifiant entre la rondelle (6) et l'écrou (5) et aussi entre la vis (2) et l'écrou (5).

Sur la figure 2, le système de fixation (1) est représenté dans un état serré, et notamment après rupture de la gorge (7) correspondant à une précontrainte de tension axiale déterminée entre la vis (2) et l'écrou (5). Seule la partie (5b) de l'écrou (5) reste sur la vis (2).

Sur la figure 3, l'écrou (5) est représenté en détail. Comme indiqué, il comprend deux parties (5a, 5b). La partie (5b) comprend un taraudage (8), tandis que la partie (5a) présente une paroi interne lisse, lui permettant d'être facilement retirée après rupture de la gorge (7). L'invention concerne un procédé de fabrication dudit système de fixation (1). Pour mieux comprendre le procédé, un exemple de boulon M20x90 sera détaillé ci-dessous. Le boulon comprend une vis (2) du type M20x90 HR10.9, un écrou (5) du type M20 HR10, et deux rondelles (6) de diamètre 20 mm.

Selon les normes EN 1090-2 et EN 14399, la tension axiale pour une vis M20x90 HR10.9 est déterminée par une formule :

$$F_{p,C} = 0.7 f_{ub} A_s$$

où $f_{ub}$ est la limite de rupture égale à 1000 N/mm², et $A_S$ est la section de la vis égale à 245 mm². Ainsi la tension axiale requise entre la vis et l'écrou est de 172 kN.

Il convient ensuite de calculer le couple de serrage à atteindre en prenant en compte les coefficients de frottements et l'effort de tension axiale déterminé.

Pour pouvoir définir la relation entre le couple auquel doit se rompre la gorge et la tension, la détermination des coefficients de frottement est nécessaire. Or, dans cet exemple, les coefficients définis sont les suivants :

$\mu_{th}$ = 0.10, coefficient de frottement sur filetage entre la vis (2) et l'écrou (5) ;

$\mu_b$ = 0.10, coefficient de frottement sur appui entre l'écrou (5) et la rondelle (6) ;

De préférence, pour maitriser les coefficients, l'agent lubrifiant est disposé entre la vis (2) et l'écrou (5) et entre la rondelle (6) et l'écrou (5) qui est destiné à être entrainé en rotation.

En conséquence la relation entre le couple et la tension est la suivante :

$$F = \frac{C}{\frac{1}{2\pi}P + 0.577\mu_{th}d_2 + \mu_b\left(\frac{d_0 + d_h}{4}\right)}$$

Or, lorsque la tension visée F est 172 000 N et avec :

P = 2.5 mm, de pas de filetage de vis ;
$d_2$ = 0.0182 mm, de diamètre à flanc de filet de vis ;
$d_0$ = 0.0295 mm, de diamètre d'appui extérieur entre l'écrou (5) et la rondelle (6)
$d_h$ = 0.023 mm, de diamètre d'appui intérieur entre l'écrou (5) et le chanfrein de la rondelle (6)

le couple de serrage à atteindre est de C = 475Nm.

Le dimensionnement de la gorge doit ainsi être réalisé afin d'assurer d'obtenir la rupture en torsion de celle-ci lorsque ce couple est atteint. Lorsque ce couple de serrage est atteint, et les coefficient de frottement étant validés, la tension obtenue lors de la rupture correspond à $F_{p,C}$, c'est-à-dire à la tension axiale déterminée et calibrée.

Lors de la fabrication du système de fixation, plusieurs contraintes dimensionnelles sont à respecter, à savoir :

- le diamètre interne de la partie (5a) de l'écrou (5) doit être supérieur au diamètre interne de la partie (5b) ;
- la zone d'intersection entre le taraudage de la partie (5b) et la paroi interne lisse de la partie (5a) doit être à proximité du diamètre de fond de gorge ;
- la gorge (7) doit correspondre à une zone réduite afin d'obtenir une rupture franche et non dispersive. Ainsi il est nécessaire à prévoir une zone de concentration de contraintes, par exemple avec un angle et/ou faible rayon de fond de gorge, ou autres méthodes connues de l'homme du métier.

Les formules de résistance des matériaux sont utilisées pour réaliser le dimensionnement du diamètre de fond de gorge. En effet, l'écrou (5) avec une gorge (7) peut être modélisé comme un tube. Ainsi, la contrainte de cisaillement τ sous torsion est égale à

$$\tau = \frac{C}{\frac{I_0}{V}} = \frac{C}{\frac{\pi(D^4 - d^4)}{16D}}$$

Avec

C = couple
D = diamètre du fond de gorge,
d = diamètre intérieur lisse

Finalement, un coefficient $K_{ts}$ de concentration de contrainte doit être pris en compte suivant l'angle et/ou le rayon de fond de gorge. Des abaques des coefficients de concentration de contrainte sont bien connus de l'homme du métier, de sorte qu'il saura adapter le bon coefficient en fonction de l'écrou (5) conçu.

La contrainte de cisaillement τ est donc multipliée par le coefficient de concentration pour obtenir une valeur finale $\tau_{max}$, qui doit dépasser la résistance de matériau de l'écrou (5).

De cette façon la gorge (7) est apte à se rompre sous un couple de serrage correspondant à un effort de tension axiale prédéterminé entre la vis (2) et l'écrou (5), de sorte que le procédé de fabrication du système de fixation (1) selon l'invention permet de calibrer et de maitriser la précontrainte axiale entre les éléments de fixation, sans nécessiter d'outils spécifiques.

**Revendications**

1. Procédé de fabrication d'un système de fixation (1) à effort de tension axiale calibrée, pour la fixation d'au moins deux éléments (3 et 4) entre eux, le système (1) comprenant une pièce de fixation (2) et une pièce de blocage (5), la pièce de blocage (5) comprenant deux parties séparées (5a, 5b) par une gorge (7) apte à se rompre sous un couple de serrage, *caractérisé* **en ce qu'**il consiste à :

   - déterminer le coefficient de frottement entre la pièce de fixation (2) et la pièce de blocage (5) ;
   - lorsque la pièce de fixation (2) est destinée à être entrainée en rotation, déterminer le coefficient de frottement entre la pièce de fixation (2) et l'élément (3) en contact ;
   - lorsque la pièce de blocage (5) est destinée à être entrainée en rotation :

      o déterminer le coefficient de frottement entre la pièce de blocage (5) et l'élément (4) en contact,
      ou,
      o si une rondelle (6) est disposée entre la pièce de blocage (5) et l'élément (4) à fixer, déterminer le coefficient de frottement entre la pièce de blocage (5) et la rondelle (6) ;

   - calculer le couple de serrage à atteindre pour obtenir l'effort de tension axiale calibrée en prenant en compte les coefficients de frottements déterminés ;
   - dimensionner la gorge (7) pour qu'elle soit apte à se rompre lorsque le couple de serrage calculé est atteint, correspondant alors à l'obtention de la tension axiale calibrée dans le système de fixation.

2. Procédé de fabrication selon la revendication 1 *caractérisé* **en ce que**, pour faire varier et maitriser les coefficients de frottements, un agent lubrifiant est disposé :

   - entre la pièce de fixation (2) et la pièce de blocage (5), ou
   - lorsque la pièce de fixation (2) est destinée à être entrainée en rotation, entre la pièce de fixation (2) et l'élément (3) en contact, ou
   - lorsque la pièce de blocage (5) est destinée à être entrainée en rotation :

      o entre la pièce de blocage (5) et l'élément (4) en contact, ou
      o si une rondelle (6) est disposée entre la pièce de blocage (5) et l'élément (4) à fixer, entre la pièce de blocage (5) et la rondelle (6).

3. Procédé de fabrication selon la revendication 1 *caractérisé* **en ce que** la pièce de fixation (2) est une vis et la pièce de blocage (5) est un écrou.

**Patentansprüche**

1. Verfahren zur Herstellung eines Befestigungssystems (1) mit kalibrierter axialer Spannungsbeanspruchung zur Befestigung von mindestens zwei Elementen (3 und 4) untereinander, wobei das System (1) ein Befestigungsteil (2) und ein Sperrteil (5) umfasst, das Sperrteil (5) wiederum umfasst zwei durch eine Kehle (7) getrennte Teile (5a, 5b), die unter einem Anzugsmoment brechen können, *dadurch gekennzeichnet, dass* es darin besteht:

   - den Reibungskoeffizient zwischen dem Befestigungsteil (2) und dem Sperrteil (5) zu bestimmen;
- wenn das Befestigungsteil (2) dazu bestimmt ist in Drehung angetrieben zu werden, den Reibungskoeffizienten zwischen dem Befestigungsteil (2) und dem Element (3) in Kontakt zu bestimmen;
- wenn das Sperrteil (5) dazu bestimmt ist in Drehung angetrieben zu werden:

o den Reibungskoeffizienten zwischen dem Befestigungsteil (5) und dem Element (4) in Kontakt zu bestimmen,
o wenn eine Unterlegscheibe (6) zwischen dem Sperrteil (5) und dem zu befestigenden Element (4) vorgesehen ist, den Reibungskoeffizienten zwischen dem Sperrteil (5) und der Unterlegscheibe (6) bestimmen;

- das Anzugsmoment zu berechnen, das erreicht werden muss, um den kalibrierten axiale Spannungsbeanspruchung unter Berücksichtigung bestimmter Reibungskoeffizienten zu erzielen;
- die Kehle (7) so zu dimensionieren, dass sie brechen kann, sobald das berechnete Anzugsmoment erreicht ist, was dann dem Erreichen der kalibrierten axiale Spannungsbeanspruchung im Befestigungssystem entspricht.

2. Herstellungsverfahren nach Anspruch 1 *dadurch gekennzeichnet, dass* zur Veränderung und Beherrschung der Reibungskoeffizienten ein Schmiermittel vorgesehen ist:

- zwischen dem Befestigungsteil (2) und dem Sperrteil (5), oder
- wenn das Befestigungsteil (2) in Drehung angetrieben werden soll, zwischen dem Befestigungsteil (2) und dem Element (3) in Kontakt, oder
- wenn das Sperrteil (5) dazu bestimmt ist in Drehung angetrieben zu werden:

o zwischen dem Sperrteil (5) und dem Element (5) in Kontakt, oder
o wenn eine Unterlegscheibe (6) zwischen dem Sperrteil (5) und dem zu befestigenden Element (4) vorgesehen ist, zwischen dem Sperrteil (5) und der Unterlegscheibe (6).

3. Herstellungsverfahren nach Anspruch 1 *dadurch gekennzeichnet, dass* das Befestigungsteil (2) eine Schraube ist und das Sperrteil (5) eine Mutter ist.

**Claims**

1. Method for manufacturing a fastening system (1) with calibrated axial tension force, for fastening at least two elements (3 and 4) together, the system (1) comprising a fastening part (2) and a clamping part (5), the clamping part (5) comprising two parts separated (5a, 5b) by a groove (7) capable of breaking under a tightening torque, **characterised in that** it consists of:

- determining the friction coefficient between the fastening part (2) and the clamping part (5);
- when the fastening part (2) is intended to be rotated, determining the friction coefficient between the fastening part (2) and the element (3) in contact;
- when the clamping part (5) is intended to be rotated:

∘ determining the friction coefficient between the clamping part (5) and the element (4) in contact,
or,
∘ if a washer (6) is disposed between the clamping part (5) and the element (4) to be fastened, determining the friction coefficient between the clamping part (5) and the washer (6);

- calculating the tightening torque to be achieved in order to obtain the calibrated axial tension force by considering the friction coefficients determined;
- sizing the groove (7) such that it is capable of breaking when the calculated tightening torque is reached, thus corresponding to obtaining the calibrated axial tension in the fastening system.

2. Manufacturing method according to claim 1, **characterised in that**, in order to vary and control the friction coefficients, a lubricating agent is disposed:

- between the fastening part (2) and the clamping part (5), or
- when the fastening part (2) is intended to be rotated, between the fastening part (2) and the element (3) in contact, or
- when the clamping part (5) is intended to be rotated:

o between the clamping part (5) and the element (4) in contact, or
o if a washer (6) is disposed between the clamping part (5) and the element (4) to be fastened, between the clamping part (5) and the washer (6).

3. Manufacturing method according to claim 1, **characterised in that** the fastening part (2) is a screw and the clamping part (5) is a nut.

Fig. 1

Fig. 2

Fig. 3

**RÉFÉRENCES CITÉES DANS LA DESCRIPTION**

**Documents brevets cités dans la description**

- US 2940495 A